# EUROPÄISCHE PATENTSCHRIFT

(11) **EP 3 268 290 B1**
(45) Veröffentlichungstag und Bekanntmachung des Hinweises auf die Patenterteilung: **22.04.2020**
(21) Anmeldenummer: 16708997.8
(22) Anmeldetag: 07.03.2016
(51) Int. Cl.: G01F 11/26, B65D 41/26, B65D 47/26, B65D 47/24, B65D 51/28

(54) **DOSIER- UND AUSGIESSVORRICHTUNG FÜR FLIESSFÄHIGE SUBSTANZEN UND MIT EINER DERARTIGEN DOSIER- UND AUSGIESSVORRICHTUNG AUSGESTATTETER BEHÄLTER**
DOSING AND POURING APPLIANCE FOR FLOWABLE SUBSTANCES AND CONTAINER EQUIPPED WITH A SUCHLIKE DOSING AND POURING APPLIANCE
DISPOSITIF DE DOSAGE ET DE COULÉE POUR DES SUBSTANCES FLUIDES ET RÉCIPIENT ÉQUIPÉ AVEC UN TEL DISPOSITIF DE DOSAGE AT DE COULÉE

(30) Priorität: 11.03.2015 CH 3362015
(43) Veröffentlichungstag der Anmeldung: 17.01.2018
(73) Patentinhaber: Alpla Werke Alwin Lehner GmbH & Co. KG, 6971 Hard (AT)
(72) Erfinder: HLAVACEK, Thomas, 6900 Bregenz (AT); HOCH, Oliver, 6844 Altach (AT)
(74) Vertreter: Bohest AG Branch Ostschweiz
(86) Internationale Anmeldenummer: PCT/EP2016/054748
(87) Internationale Veröffentlichungsnummer: WO 2016/142322

(56) Entgegenhaltungen:
- EP-A1- 1 717 158
- FR-A3- 2 716 170
- GB-A- 1 080 186
- US-A- 3 245 564
- US-A- 5 947 331

## Beschreibung

Die Erfindung betrifft eine Dosier- und Ausgiessvorrichtung für fliessfähige Substanzen wie sie in Patentanspruch 1 definiert ist. Die Erfindung betrifft auch einen mit einer derartigen Dosier- und Ausgiessvorrichtung versehenen Behälter, insbesondere Kunststoffbehälter.

Im Haushalt, in Gewerbe und Industrie aber auch in medizinischen und pharmazeutischen Anwendungen ist es vielfach erforderlich, in einem Behälter, beispielsweise in einer Flasche oder in einem Fläschchen, untergebrachte fliessfähige Substanzen dosiert auszubringen. Der Begriff "fliessfähige Substanzen" umfasst gemäss der vorliegenden Erfindung Flüssigkeiten, deren Viskosität klein genug ist, um einen ungestörtes kontinuierliches Fliessen zu gewährleisten, ebenso wie rieselfähige Feststoffe, beispielsweise Pulver und Granulate. Aus dem Stand der Technik sind beispielsweise Dosiervorrichtungen für Flüssigkeiten und Cremes bekannt, die mit einer Dosierpumpe von definiertem Hubvolumen ausgebracht werden. Andere bekannte Dosiersysteme weisen einen zusammenquetschbaren Kunststoffbehälter auf, dessen Behälterinneres über einem Kanal oder eine Leitung mit einer aufgesetzten Dosierkammer in Verbindung steht. Durch Zusammenquetschen des Kunststoffbehälters wird die Dosierkammer mit Flüssigkeit gefüllt. Aus dieser kann dann die Flüssigkeit, mehr oder weniger genau dosiert, ausgegossen werden.

Diese bekannten Dosiervorrichtungen bzw. Dosiersysteme sind üblicherweise sehr spezifisch auf die auszubringende Substanz ausgerichtet, und sie sind meist nur in Verbindung mit Flüssigkeiten und Cremes einsetzbar. Dosierflaschen mit zusammenquetschbaren Behälterwandungen und aufgesetzten Dosierkammern sind als spezielle Dosiersysteme gestaltet. Diese sind relativ aufwendig in der Herstellung und weisen eine nur geringe Dosiergenauigkeit auf.

In der GB-1,080,186 ist ein Behälter mit einem Verschluss und einem zweiteiligen Einsatz mit einem Auftragschwamm, beispielsweise zum Aufbringen von Schuhcreme beschrieben. Der zweiteilige Einsatz weist einen stationären Teil und einen demgegenüber verdrehbaren Teil auf. Durch das Verdrehen des drehbaren Teils gegenüber dem stationären Teil werden Öffnungen im Einsatz zur Überdeckung gebracht. Dadurch wird es ermöglicht, dass Flüssigkeit bzw. Creme zu dem Auftragsschwamm gelangt. Beim Aufschrauben der Verschlusskappe werden die Öffnungen geschlossen, während sie beim Abschrauben der Verschlusskappe zur Überdeckung gebracht werden. Der verdrehbare Teil des Einsatzes wird beim Auf- bzw. beim Abschrauben der Verschlusskappe durch Reibschluss mitgenommen. Eine dosierte Abgabe des Behälterinhalts ist mit dem beschriebenen Behälter nicht möglich.

Aufgabe der vorliegenden Erfindung ist es daher, eine Dosier- und Ausgiessvorrichtung zu schaffen, welche für den Einsatz in Verbindung mit Flüssigkeiten oder mit rieselfähigen Substanzen geeignet ist. Die Dosier- und Ausgiessvorrichtung soll eine gute Dosiergenauigkeit aufweisen. Dabei soll sie einen relativ einfachen Aufbau aufweisen und eine einfache Montage ermöglichen. Die Dosier- und Ausgiessvorrichtung soll in Verbindung mit Behältern mit festen Behälterwandungen, beispielsweise mit Glasflaschen, oder in Verbindung mit Behältern mit Behälterwandungen, die eine gewisse Flexibilität aufweisen, beispielsweise mit Kunststoffflaschen, einsetzbar sein.

Die Lösung dieser Aufgaben besteht in einer Dosier- und Ausgiessvorrichtung für fliessfähige Substanzen, welche die Patentanspruch 1 angeführten Merkmale aufweist. Weiterbildungen und/oder vorteilhafte Ausführungsvarianten der Erfindung sind Gegenstand der abhängigen Patentansprüche.

Durch die Erfindung wird in ihrer allgemeinsten Ausführungsform eine Dosier- und Ausgiessvorrichtung für fliessfähige Substanzen vorgeschlagen, die ein Aufnahmeteil besitzt, das eine Dosierkammer umschliesst und wenigstens ein Durchtrittsfenster aufweist. Innerhalb des Aufnahmeteils ist ein Dosiereinsatz angeordnet, der relativ zum Aufnahmeteil verdrehbar ist und mit wenigstens einem Dosierfenster ausgestattet ist. Weiters weist die Dosier- und Aussgiessvorrichtung ein drehbares Verschlussteil auf, das mit ersten Eingriffsmitteln ausgestattet ist, welche sich im zusammengefügten Zustand der Komponenten mit korrespondierenden zweiten Eingriffsmitteln am Dosiereinsatz derart in Eingriff befinden, dass ein Verdrehen des Verschlussteils von einer ersten in eine zweite Position und umgekehrt in einer Verdrehung des Dosiereinsatzes relativ zum Aufnahmeteil resultiert. In der ersten Position überdecken einander das wenigstens eine Dosierfenster des Dosiereinsatzes und das wenigstens eine Durchtrittsfenster des Aufnahmeteils zumindest teilweise, so dass die Dosierkammer des Dosiereinsatzes bei verschlossener Dosier- und Ausgiessvorrichtung durch Kopfüberschwenken eines Behälters, auf den die Dosier- und Ausgiessvorrichtung montiert ist, und wieder Zurückschwenken in die Ausgangsstellung gefüllt werden kann. In der zweiten Position sind das wenigstens eine Dosierfenster und das wenigstens eine Durchtrittsfenster voneinander getrennt, so dass der Verschlussteil abgenommen werden und die in der Dosierkammer befindliche abgemessene Menge der fliessfähigen Substanz ausgegossen werden kann. Bei einem Verdrehen des Verschlussteils über die zweite Position hinaus sind die ersten und zweiten Eingriffsmittel ausser Eingriff.

Die erfindungsgemäss Dosier- und Ausgiessvorrichtung weist einen sehr einfachen Aufbau und eine ebenso einfache Bedienbarkeit auf. Die aus nur drei Teilen zusammengesetzte Dosier- und Ausgiessvorrichtung verzichtet auf komplexe Pumpenkonstruktionen und erfordert keine Behälter mit flexiblen bzw. zusammenquetschbaren Behälterwandungen. Das Öffnen und Schliessen der wenigstens einen Dosieröffnung ist mit dem drehbaren Verschlussteil gekoppelt. Wird das Verschlussteil beispielsweise abgenommen, präsentiert sich die wenigstens eine Dosieröffnung im geschlossenen Zustand und die Dosierkammer kann entleert werden. Beim Verschliessen der Dosierkammer mit dem Verschlussteil wird die wenigstens eine Dosieröffnung wieder wenigstens teilweise in Überdeckung mit der wenigstens einen Durchtrittsöffnung im Aufnahmeteil gebracht. Dadurch kann die Dosierkammer im geschlossenen Zustand wieder gefüllt werden. Das Füllen und Entleeren der Dosierkammer erfolgt nach einem für den Anwender verständlichen Ablauf. Ein Entleeren der Dosierkammer bei geöffneter Dosieröffnung kann zuverlässig verhindert werden. Die Dosier- und Ausgiessvorrichtung ist für Behälter mit starren Wandungen, beispielsweise Glasflaschen, ebenso geeignet wie für Kunststoffflaschen, deren Wandungen flexibel, insbesondere zusammenpressbar, sind. Das Füllen der Dosierkammer erfolgt lediglich durch Ausnutzung der Schwerkraft, indem ein mit einer Dosier- und Ausgiessvorrichtung versehener Behälter im geschlossenen Zustand auf den Kopf gestellt wird. Dadurch kann die fliessfähige Substanz, beispielsweise eine Flüssigkeit oder ein rieselfähiges Pulver oder Granulat, in die Dosierkammer gelangen. Dies kann dadurch unterstützt sein, dass der Behälter nur auf dem Verschlussteil stehend lagerbar ist.

Eine Ausführungsvariante der Erfindung kann vorsehen, dass ein Verdrehen des Verschlussteils eine Bewegung desselben in axiale Richtung bewirkt. Dies ist beispielsweise mittels eines mehrgängigen Gewindes erzielbar. Durch die axiale Bewegung des Verschlussteils, nämlich dann, wenn das Verschlussteil über die zweite Position hinaus verdreht wird, können die ersten und zweiten Eingriffsmittel ausser Eingriff gebracht werden.

In einer Ausführungsvariante der Dosier- und Ausgiessvorrichtung weist das Aufnahmeteil einen Innenmantel auf, der eine rotationssymmetrische Aufnahmekammer mit einem ersten Kammerabschnitt umschliesst und an seinem einen axialen Ende einen etwa radial abragenden flanschartigen Öffnungsrand aufweist. Der erste Kammerabschnitt erstreckt sich vom flanschartigen Öffnungsrand axial zu einer umlaufenden, vorzugsweise geneigten Abstützfläche, in der das wenigstens eine Durchtrittsfenster ausgebildet ist. Der Dosiereinsatz ist korrespondierend mit dem Aufnahmeteil ausgebildet und besitzt einen mit einem Einsatzboden verschlossenen Mantel. Der Mantel umschliesst eine Überschusskammer, die sich von einem Mündungsrand bis zu einer umlaufenden, geneigten Verbindungsfläche erstreckt, in der das wenigstens eine Dosierfenster ausgebildet ist, und die Dosierkammer, die sich von der Verbindungsfläche axial bis zu einem Einsatzboden erstreckt und einen kleineren Innendurchmesser aufweist als die Überschusskammer.

Das Vorsehen einer Überschusskammer direkt in Anschluss an die Dosierkammer verbessert die Dosiergenauigkeit. Während zunächst beide Kammern mit der fliessfähigen Substanz gefüllt werden, beispielsweise indem ein Behälter mit montierter verschlossener Dosier- und Ausgiessvorrichtung auf den Kopf gestellt wird, kann beim Abstellen des Behälters auf seine Standfläche die Überschusskammer durch die miteinander wenigstens teilweise in Überdeckung befindlichen Dosierfenster und Durchtrittsfenster wieder entleert werden. Die vorzugsweise geneigte Verbindungsfläche unterstützt die Entleerung der Überschusskammer durch das wenigstens eine Dosierfenster und Durchtrittsfenster zurück in den Behälter. Im Dosiereinsatz verbleibt nur die Menge an Substanz, die sich in der Dosierkammer gesammelt hat. Wegen der Überschusskammer ist gewährleistet, dass die Dosierkammer auch wirklich zur Gänze gefüllt wird. Beim drehenden Entfernen des Verschlussteils wird das wenigstens eine Dosierfenster geschlossen, und die ersten und zweiten Eingriffsmittel werden ausser Eingriff gebracht. Die ersten und zweiten Eingriffsmittel werden in der Regel ausser Eingriff gebracht, bevor die formschlüssige Verbindung des Verschlussteils zu seinem Gegenpart aufgehoben ist. Danach kann die nun geöffnete Dosierkammer entleert werden.

In einer weiteren Ausführungsvariante der Erfindung sind die ersten Eingriffsmittel am Verschlussteil wenigstens eine axial verlaufende Leiste, die an einer Umfangsfläche einer Eingriffsschürze, die sich von einer inneren Deckfläche des Verschlussteils erstreckt, angeordnet ist und diese radial überragt. Die zweiten Eingriffsmittel sind eine mit den ersten Eingriffsmitteln korrespondierende Abfolge von axialen Rippen und Nuten, die in Nachbarschaft zum Mündungsrand an einer Wandung der Überschusskammer vorgesehen sind. Die Wandung kann eine Innenwandung oder eine Aussenwandung der Überschusskammer sein. Entsprechend kann die wenigstens eine axiale Leiste an einer Innen- oder an einer Aussenfläche der von der inneren Deckfläche des Verschlussteils abragenden Eingriffsschürze angeordnet sein. Die ersten und zweiten Eingriffsmittel sind vorzugsweise gleichmässig über den Umfang verteilt. Dadurch kann ein zuverlässige relative Verdrehung des Dosierteils zum Aufnahmeteil gewährleistet werden.

Damit es beim Eingreifen der ersten und zweiten Eingriffsmittel ineinander zu keinen Verkantungen kommen kann und damit die Eingriffsmittel nicht versehentlich Stirnseite auf Stirnseite aneinander anstehen, besitzt jede von zwei aufeinanderfolgenden axialen Rippen begrenzte Nut an der Innenwandung der Überschusskammer einen in Richtung des Mündungsrands erweitert ausgebildeten Einlaufbereich für die wenigstens eine korrespondierende Leiste an der Eingriffsschürze. Die Einlaufbereiche gewährleisten eine fehlerfreie Funktion der beim drehenden Aufbringen des Verschlussteils ineinandergreifenden Eingriffsmittel.

Eine weitere Ausführungsvariante der Erfindung kann vorsehen, die wenigstens eine axiale Rippe an der Eingriffsschürze einen Teilbereich aufweist, der sich zum freien Ende der wenigstens einen Rippe verjüngt. Dadurch kann die Gefahr eines Anstehens der Stirnseiten der Eingriffsmittel aneinander noch weiter verringert werden.

Am Verschlussteil kann ein Dichtungselement vorgesehen sein, welches das Innere der Dosierkammer zuverlässig abdichtet. Dazu ragt von der inneren Deckfläche des Verschlussteils ein ringförmiger Dichtsteg in axialer Richtung ab, der die Eingriffsschürze konzentrisch umgibt und sich im zusammengefügten Zustand der Komponenten in radialer Anlage am flanschartigen Öffnungsrand befindet. Durch den umlaufenden Dichtsteg ist selbst dann, wenn die innere Deckfläche des Verschlussteils nicht stirnseitig am flanschartigen Öffnungsrand anliegt, der Behälter möglicherweise noch nicht vollständig geschlossen ist, eine Abdichtung gewährleistet, die verhindert, dass die im Behälter bevorratete fliessfähige Substanz in die Umgebung gelangt. Die Dichtwirkung des Verschlussteils ist somit nicht davon abhängig, mit welchem Drehmoment das Verschlussteil festgedreht wird.

Bei zusammengesetzten Komponenten ist der Dosiereinsatz durch Formschluss axial unverlierbar im Aufnahmeteil gehalten ist. Der Formschluss kann beispielsweise durch einen ringförmigen Wulst an der Aussenwandung des Mantels des Dosiereinsatzes und eine umlaufende Nut in der Innenfläche des Innenmantels des Aufnahmeteils oder umgekehrt realisiert sein. Neben der axialen Sicherung des Dosiereinsatzes im Aufnahmeteil wird durch den Formschluss auch eine erhöhte Reibung zwischen den beiden Komponenten erzielt. Diese erhöhte Reibung ist erwünscht, um zu verhindern, dass sich der Dosiereinsatz und der Aufnahmeteil schon durch kleine Erschütterungen relativ zueinander verdrehen. Die erhöhte Reibung erfordert daher einen Kraftaufwand, der in der Regel nur durch das Ineinandergreifen der Eingriffsmittel am Dosieraufsatz und am bewusst gedrehten Verschlussteil aufgebracht werden kann.

Eine Ausführungsvariante der Erfindung kann vorsehen, dass in der Abstützfläche des Innenmantels des Aufnahmeteils drei Durchtrittsfenster angeordnet sind, die jeweils einen gleichen Winkelabstand voneinander aufweisen und sich jeweils in Umfangsrichtung über einen Winkelbereich von weniger als 60° erstrecken. In dazu analoger Weise können in der Verbindungsfläche des Mantels des Dosiereinsatzes drei Dosierfenster angeordnet sein, die jeweils einen gleichen Winkelabstand voneinander aufweisen und sich jeweils in Umfangsrichtung über einen Winkelbereich von weniger als 60° erstrecken. Das Vorsehen mehrerer Dosierfenster und Durchtrittsfenster, die wenigstens teilweise miteinander zur Überdeckung bringbar sind, erleichtert die lagegenaue Montage des Dosiereinsatzes im Aufnahmeteil und ermöglicht eine schnellere Befüllung des Dosiereinsatzes mit der fliessfähigen Substanz.

Die lagegenaue Montage des Dosiereinsatzes im Aufnahmeteil kann beispielsweise durch optische Überwachungssysteme gewährleistet sein. Alternativ kann auch ein mechanisches Positionierungssystem vorgesehen sein, bei dem beispielsweise drei Finger von unten durch die Durchgangsfenster geführt werden und dann der Dosiereinsatz derart eingesetzt wird, dass die Finger durch die Dosierfenster ragen. Dadurch ist gewährleistet, dass die beiden Komponenten lagegenau positioniert werden und die Dosierfenster und die Durchgangsfenster miteinander in Überdeckung sind. Die axiale Fixierung der beiden Komponenten erfolgt dann einfach durch Zusammenpressen der beiden Teile, wobei ein Formschluss zwischen den beiden Komponenten erstellt wird. Schliesslich können auch am Dosiereinsatz und am Aufnahmeteil Positionierhilfen vorgesehen sein. Diese können beispielsweise miteinander zusammenwirkende axiale Leisten und Nuten sein.

Für eine leichtere Bedienbarkeit der zusammenmontierten Dosier- und Ausgiessvorrichtung kann es von Vorteil sein, wenn in einer weiteren Ausführungsvariante der Erfindung die rotationssymmetrische Aufnahmekammer an ihrem dem flanschartigen Öffnungsrand gegenüberliegenden Ende mit einem Kammerboden verschlossen ist. An die Abstützfläche schliesst ein zweiter Kammerabschnitt an, der sich bis zum Kammerboden erstreckt. Der Kammerboden weist an seiner dem Inneren der Aufnahmekammer zugewandten Seite eine Anzahl von kreissegmentartigen Aussparungen auf, die der Anzahl von Durchtrittsfenstern entspricht. Dabei erstreckt sich jede Aussparung zweckmässigerweise über einen Winkelbereich, welcher der Umfangserstreckung eines Durchtrittsfensters in der vorzugsweise geneigten Abstützfläche entspricht. Korrespondierend dazu ist an einer dem Kammerboden zugewandten Aussenfläche des Einsatzbodens des Dosiereinsatzes eine Anzahl radialer Leisten ausgebildet, die der Anzahl von Dosierfenstern in der Verbindungsfläche entspricht. Im zusammengefügten Zustand der Komponenten ist jede Leiste von einer Aussparung im Kammerboden aufgenommen. Die zusammenwirkenden Leisten und Aussparungen verhindern ein Überdrehen der relativ zueinander verdrehbaren Komponenten, dem Dosiereinsatz und dem Aufnahmeteil.

In einer weiteren Ausführungsvariante der Dosier- und Ausgiessvorrichtung kann in einem Endbereich ihrer Umfangserstreckung einer jeden Aussparung ein Verriegelungsvorsprung, vorzugsweise eine radiale Verriegelungsrippe, vom Grund der Aussparung abragen. Die Verriegelungsvorsprünge sorgen für eine Festlegung des Dosiereinsatzes und des Aufnahmeteils in ihren Endstellungen, welche den ersten und zweiten Positionen des Verschlussteils entsprechen, und verhindern ein unbeabsichtigtes Verdrehen relativ zueinander, beispielsweise durch Erschütterungen. Dies ist insbesondere für die die geschlossene Endstellung der beiden Komponenten wünschenswert, in der das bzw. die Dosierfenster verschlossen sind und das Verschlussteil abgeschraubt ist. Die Höhe der Verriegelungsvorsprünge kann derart bemessen sein, dass beim relativen Verdrehen des Dosiereinsatzes gegenüber dem Aufnahmeteil ein spürbarer Widerstand überwunden werden muss. Andererseits sind die Verriegelungsvorsprünge jedoch flach genug, damit es zu keinem Sperren der beiden relativ zueinander verdrehbaren Komponenten kommen kann.

Gemäss einem weiteren Ausführungsbeispiel der Erfindung können an der der Abstützfläche des Aufnahmeteils zugewandten Unterseite der Verbindungsfläche des Dosiereinsatzes im Bereich der Dosierfenster Abstreifer angeordnet sein. Die Abstreifer können insbesondere in Verbindung mit rieselfähigen Substanzen von Vorteil sein, indem sie zwischen die Verbindungsfläche und die Abstützfläche eingedrungene Partikel wieder entfernen. Die Abstreifer können beispielsweise aus einem weicheren Material bestehen als der Dosiereinsatz und das Aufnahmeteil. Die Abstreifen können einstückig mit dem Dosierteil oder auch mit dem Aufnahmeteil ausgebildet sein. Beispielsweise können die das Dosierteil oder das Aufnahmeteil mit Abstreifern in einem Zweikomponentenspritzgiessverfahren hergestellt sein.

Eine weitere Ausführungsvariante der erfindungsgemässen Dosier- und Ausgiessvorrichtung kann vorsehen, dass der flanschartige Öffnungsrand des Aufnahmeteils mit einer zylindrischen äusseren Schürze verbunden ist, die sich achsparallel und konzentrisch zum Innenmantel erstreckt und an ihrer Aussenwandung Mittel zur formschlüssigen Festlegung des mit korrespondierenden Eingriffsmitteln ausgestatteten Verschlussteils aufweist. Diese Ausführungsvariante der Erfindung erlaubt eine Vormontage des Aufnahmeteils, des Dosiereinsatzes und des Verschlussteils. Alle drei Komponenten können bereits zusammengebaut vorliegen, wobei die wenigstens eine Dosieröffnung des Dosierteils und die wenigstens eine Durchtrittsöffnung des Aufnahmeteils sich wenigstens teilweise miteinander in Überdeckung befinden, die wenigstens eine Dosieröffnung somit geöffnet ist. Beim drehenden Abnehmen des Verschlussteils vom Aufnahmeteil in einer erste Drehrichtung wird der Dosiereinsatz durch die ineinandergreifenden ersten und zweiten Eingriffsmittel, die wenigstens eine axial verlaufende Leiste an der Umfangsfläche der Eingriffsschürze des Verschlussteils und die Abfolge von axialen Rippen und Nuten in Nachbarschaft des Mündungsrands des Dosiereinsatzes, relativ zum Aufnahmeteil verdreht, bis die wenigstens eine Dosieröffnung verschlossen ist. Wird das Verschlussteil wieder auf den Aufnahmeteil, der den Dosiereinsatz aufnimmt, aufgesetzt und in die Gegenrichtung gedreht werden die ersten und zweiten Eingriffsmittel zunächst axial zusammengefahren, bis sie miteinander der zweiten Position in Eingriff gelangen. Beim Weiterdrehen werden das Dosierfenster und das Durchtrittsfenster wieder zur Überdeckung gebracht. Gleichzeitig wird der Verschlussteil am Aufnahmeteil befestigt. Bei den zuvor geschilderten Ausführungsvarianten der Erfindung wird der Verschlussteil der Dosier- und Ausgiessvorrichtung direkt am Hals eines zuvor mit einem Aufnahmeteil und Dosiereinsatz versehenen Behälters befestigt. Bei der zuletzt geschilderten Ausführungsvariante der Erfindung wird die Dosier- und Ausgiessvorrichtung als gesamtes, d.h. mit bereits aufgesetztem Verschlussteil auf dem Hals eines Behälters montiert. Die Montage erfolgt beispielsweise durch Aufprellen der zu einer Gesamtheit zusammenmontierten drei Komponenten, nämlich Aufnahmeteil, Dosiereinsatz und Verschlussteil. Die Vormontage der Dosier- und Ausgiessvorrichtung zu einer Gesamtheit aus Aufnahmeteil, Dosiereinsatz und Verschlussteil hat für den Anwender, insbesondere einen Abfüller, logistische Vorteile und Vorteile in der Handhabung. Er muss nur noch eine werkseitig vormontierte Baugruppe mit dem zugehörigen Behälter zusammenführen und auf dem Hals des Behälters montieren.

Die Mittel zur formschlüssigen Festlegung des Verschlussteils und die korrespondierenden Eingriffsmittel am Aufnahmeteil können beispielsweise zusammenwirkende Vorsprünge und Kulissenbahnen eines Bajonettverschlusses sein. In einer alternativen Ausführungsvariante der Erfindung können die formschlüssig zusammenwirkenden Mittel als am Verschlussteil angeordnete erste Gewindeabschnitte und an der äusseren Schürze angeordnete zweite Gewindeabschnitte ausgebildet sein. Insbesondere können sie beispielsweise als ein dreigeteiltes Steilgewinde ausgebildet sein, welches ein Aufsetzen und Eingreifen des Verschlussteils in drei, jeweils um 120° zueinander versetzten Positionen ermöglicht. Die Steilheit der Gewindeabschnitte ist derart ausgebildet, dass es am Anfang der Drehbewegung des Verschlussteils zu einer axialen Annäherung der ersten und zweiten Eingriffsmittel kommt, bis diese in der zweiten Position ineinandergreifen und beim weiteren Verdrehen bis zur ersten Position zu einem relativen Verdrehen des Dosiereinsatzes gegenüber dem Aufnahmeteil führen, um die wenigstens eine Dosieröffnung wieder zu öffnen. Eine Steigung der ersten und zweiten Gewindeabschnitte kann derart ausgelegt sein, dass in der ersten Position die innere Deckfläche des Verschlussteils an dem flanschartigen Öffnungsrand des Aufnahmeteils anliegt.

Der Aufnahmeteil der Dosier- und Ausgiessvorrichtung wird bei der Montage am Hals eines Behälters drehfest und axial unverlierbar montiert. Dies kann beispielsweise durch Einpressen erfolgen. Alternativ oder auch in Ergänzung dazu kann der Aufnahmeteil beispielsweise auch durch Verkleben am Behälterhals festgelegt werden. Bei der zuvor geschilderten Ausführungsvariante der Dosier- und Ausgiessvorrichtung, bei der der Aufnahmeteil, der Dosiereinsatz und der Verschlussteil zu einer vormontierten Gesamtheit zusammengesetzt sind, können zur radialen und axialen Festlegung des Aufnahmeteils an einer dem Innenmantel des Aufnahmeteils zugewandten Innenwandung der äusseren Schürze Drehsicherungen und wenigstens ein Mittel zur axiale Sicherung für eine Montage der Dosier- und Ausgiessvorrichtung auf einem mit korrespondierenden Eingriffsmitteln ausgestatteten Behälterhals vorgesehen sind. Die Drehsicherungen und das Mittel zur axialen Festlegung fixieren die Dosier- und Ausgiessvorrichtung durch Formschluss am Behälterhals. Es versteht sich jedoch, dass zusätzlich auch noch eine kraftschlüssige (z.B. Presssitz) oder stoffschlüssige (z.B. Kleben) Fixierung vorgesehen sein kann.

Einzelne oder alle Komponenten der Dosier- und Ausgiessvorrichtung, nämlich der Aufnahmeteil, der Dosiereinsatz und der Verschlussteil, können in einem Kunststoffspritzverfahren, insbesondere in einem Spritzgiessverfahren, hergestellt sein. Hierbei kann jede der Komponenten einstückig ausgebildet sein.

Ein mit einer erfindungsgemäss ausgebildeten Dosier- und Ausgiessvorrichtung ausgestatteter Behälter zur Aufnahme von fliessfähigen Substanzen mit einer Dosier- und Ausgiessvorrichtung weist einen Behälterhals auf, auf dem der Aufnahmeteil der Dosier- und Ausgiessvorrichtung drehfest und axial unverlierbar montiert ist. Die Festlegung des Aufnahmeteils am Behälterhals kann durch einen Formschluss und/oder durch Verkleben und/oder durch einen Presssitz gewährleistet sein. Beispielsweise ist der Behälterhals wenigstens an einem Teil seines Umfangs mit einer Abfolge von sich axial erstreckenden Zähnen und Nuten ausgebildet. Diese können beispielsweise formschlüssig mit einer korrespondierenden Verzahnung zusammenwirken, die an einer Innenwandung einer axialen Schürze des Aufnahmeteils ausgebildet ist, welche den Behälterhals umschliesst.

Die Dosier- und Ausgiessvorrichtung ist derart an einem Behälterhals montiert, dass bei aufgesetztem Verschlussteil das wenigstens eine Dosierfenster des Dosiereinsatzes sich in zumindest teilweiser Überdeckung mit dem Durchtrittsfenster im Aufnahmeteil befindet. Der verschlossene Behälter ist dadurch immer für eine Dosierung bereit. Ist der Behälter beispielsweise auf den Kopf gestellt, ist die Dosierkammer einschliesslich der Überschusskammer ständig gefüllt. Steht er auf seiner Standfläche, ist die Dosierkammer zunächst leer. Zum Füllen der Dosierkammer muss der Behälter nur einmal um 180° gedreht werden. Beim Zurückdrehen fliesst überschüssige Substanz durch das wenigstens eine geöffnete Dosierfenster in das Behälterinnere zurück. Die Dosierkammer hingegen bleibt gefüllt. Beim Entfernen des Verschlussteil wird das Dosierfenster geschlossen und ist sichergestellt, dass keine Substanz aus dem Behälterinneren ausfliessen kann. Zur Unterstützung der Befüllung der Dosierkammer kann der Behälter als ein sogenannter Kopfstehbehälter ausgebildet sein, der nur auf dem Verschlussteil stehend lagerbar ist.

Die erfindungsgemässe Dosier- und Ausgiessvorrichtung ist für eine Montage auf einem Behälter mit starren Wandungen, beispielsweise eine Glasflasche, ebenso geeignet, wie für eine Montage auf einem Behälter mit flexiblen Wandungen, beispielsweise einen Kunststoffbehälter. Der Kunststoffbehälter ist dabei mit Vorteil in einem Blasverfahren, beispielsweise Extrusionsblasverfahren, Streckblasverfahren, Spritzblasverfahren, aus einem für die erwähnten Verfahren geeigneten Kunststoff hergestellt.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen in nicht massstabsgetreuer Darstellung:
- Fig. 1 und 2: zwei Schnittdarstellungen eines mit einer erfindungsgemässen Dosier- und Ausgiessvorrichtung ausgestatteten Behälters;
- Fig. 3 und 4: zwei perspektivische Ansichten eines Aufnahmeteils der Dosier- und Ausgiessvorrichtung;
- Fig. 5: eine axial geschnittene Ansicht des Aufnahmeteils;
- Fig. 6: eine perspektivische Ansicht des Aufnahmeteils von unten;
- Fig. 7: eine perspektivische Ansicht eines Dosiereinsatzes;
- Fig. 8: eine axial geschnittene Ansicht des Dosiereinsatzes;
- Fig. 9: eine Draufsicht auf den Dosiereinsatz;
- Fig. 10: eine perspektivische Ansicht des Dosiereinsatzes von unten;
- Fig. 11: eine perspektivische Ansicht eines Verschlussteils;
- Fig. 12: eine axial geschnittene Ansicht des Verschlussteils;
- Fig. 13: eine perspektivische Ansicht des Verschlussteils von unten;
- Fig. 14 und 15: zwei perspektivische Ansichten eines Aufnahmeteils mit darin montiertem Dosiereinsatz in geöffnetem Zustand;
- Fig. 16: eine axial geschnittene Ansicht der beiden zusammengefügten Komponenten gemäss Fig. 14 und 15;
- Fig. 17: eine Detaildarstellung gemäss dem Kreis D in Fig. 16;
- Fig. 18: eine schematische Darstellung einer Überdrehsicherung im Bodenbereich des Aufnahmeteils und des Dosiereinsatzes in geöffnetem Zustand;
- Fig. 19: eine Detaildarstellung gemäss dem Kreis B in Fig. 16;
- Fig. 20: eine perspektivische Ansicht eines Aufnahmeteils mit darin montiertem Dosiereinsatz in geschlossenem Zustand;
- Fig. 21: eine axial geschnittene Ansicht der beiden zusammengefügten Komponenten gemäss Fig. 20;
- Fig. 22: eine Detaildarstellung gemäss dem Kreis D in Fig. 21;
- Fig. 23: eine schematische Darstellung einer Überdrehsicherung im Bodenbereich des Aufnahmeteils und des Dosiereinsatzes in geschlossenem Zustand;
- Fig. 24: ein Ausführungsbeispiel eines zur Aufnahme einer erfindungsgemässen Dosier- und Ausgiessvorrichtung ausgebildeten Behälterhalses;
- Fig. 25: eine axial geschnittene Ansicht eines auf einem Behälterhals gemäss Fig. 24 montierten Aufnahmeteils; und
- Fig. 26: eine Querschnittsdarstellung einer Drehsicherung des Aufnahmeteils auf einem Behälterhals gemäss Fig. 24.

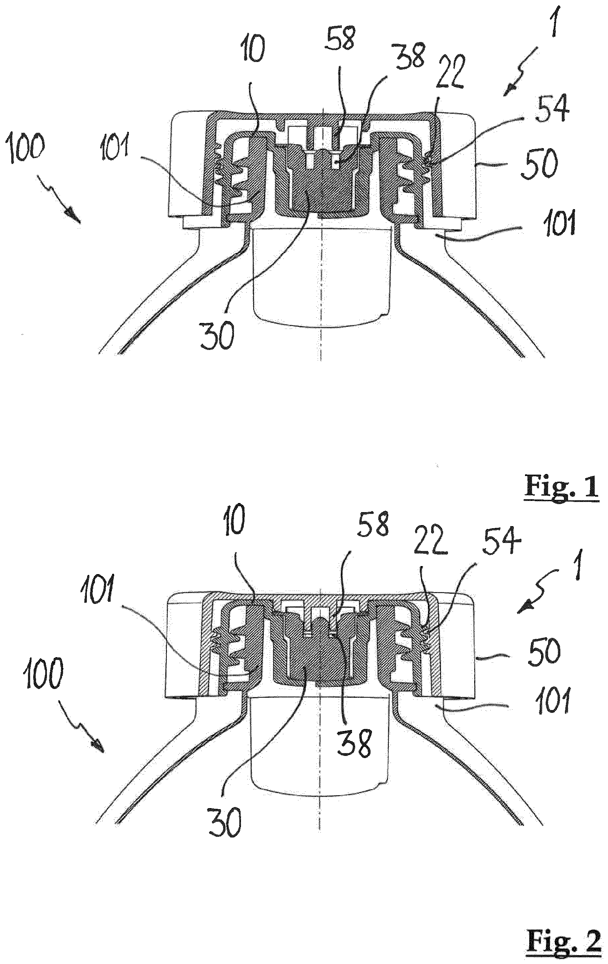

Die Figuren 1 und 2 zeigen zwei axial geschnittene Ansichten einer Dosier- und Ausgiessvorrichtung 1, die auf einem Hals 101 eines Behälters 100, beispielsweise einer Kunststoffflasche, montiert ist. Die Dosier- und Ausgiessvorrichtung 1 umfasst drei Komponenten, nämlich ein Aufnahmeteil 10, einen unverlierbar und relativ zum Aufnahmeteil drehbar montierten Dosiereinsatz 30 und ein Verschlussteil 50, das gemäss dem dargestellten Ausführungsbeispiel formschlüssig mit dem Aufnahmeteil 10 verbunden ist. Fig. 1 und Fig. 2 zeigen das Verschlussteil 50 in zwei Positionen, einmal (Fig. 1) kurz nachdem es auf den Aufnahmeteil 10 aufgesetzt und gerade soweit verdreht worden ist, dass das Verschlussteil 10 in einer zweiten Position in formschlüssigen Eingriff mit korrespondierenden Mitteln am Aufnahmeteil 10 gekommen sind und einmal (Fig. 2) in einer ersten Position, in der das Verschlussteil 10 vollständig aufgedreht ist. Im Folgenden wird noch näher auf die Funktion des Verschlussteils 50 zur Betätigung der Dosier- und Ausgiessvorrichtung 1 eingegangen.

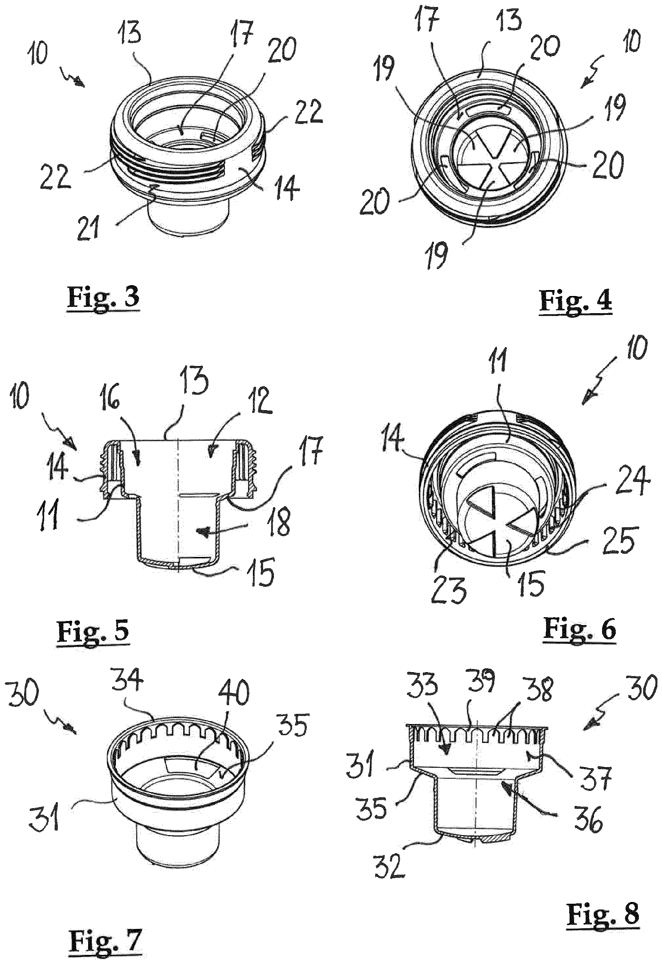

Figuren 3, 4 und 6 zeigen drei perspektivische Ansichten des Aufnahmeteils 10. Fig. 5 zeigt eine axiale geschnittene Ansicht des Aufnahmeteils 10. Der Aufnahmeteil 10 besitzt einen Innenmantel 11, der eine rotationssymmetrische Aufnahmekammer 12 umschliesst. An seinem einen axialen Ende ragt vom Innenmantel 11 etwa radial ein flanschartiger Öffnungsrand 13 ab, an den eine im wesentlichen parallel zum Innenmantel 11 verlaufende äussere Schürze 14 anschliesst. An einer Aussenfläche 21 der äusseren Schürze 14 sind zweite Gewindeabschnitte 22 ausgebildet. An seinem dem Öffnungsrand 13 gegenüberliegenden axialen Ende ist der Innenmantel 11 mit einem Kammerboden 15 verschlossen. Die Aufnahmekammer 12 besitzt einen ersten Kammerabschnitt 16, der sich vom flanschartigen Öffnungsrand 13 axial zu einer umlaufenden, in dem dargestellten Ausführungsbeispiel geneigten Abstützfläche 17 erstreckt. Ein zweiter Kammerabschnitt 18 erstreckt sich von der Abstützfläche 17 bis zum Kammerboden 15. In der umlaufenden, geneigten Abstützfläche 17 sind drei Durchtrittsfenster 20 ausgespart, die sich in Umfangsrichtung beispielsweise über einen Winkel von 60° oder weniger erstrecken. Gemäss dem dargestellten Ausführungsbeispiels sind in der Abstützfläche 17 drei Durchtrittsfenster 20 ausgebildet. Es versteht sich, dass die Anzahl der Durchtrittsfenster auch kleiner sein kann. Beispielsweise kann auch nur ein Durchtrittsfenster vorgesehen sein. Eine alternative Ausführungsvariante kann auch eine grössere Anzahl von Durchtrittsfenstern aufweisen, die sich dann entsprechend über einen kleineren Winkelbereich der Abstützfläche erstrecken. Schliesslich können in der Abstützfläche nach Art eines groben Siebes sogar eine Vielzahl von kleineren Durchtrittsfenstern bzw. -öffnungen vorgesehen sein. Der zweite Kammerabschnitt 18 weist einen kleineren Innendurchmesser auf als der erste Kammerabschnitt 16. Im Kammerboden 15 sind gemäss dem dargestellten Ausführungsbeispiel drei kreissegmentartige Aussparungen 19 ausgebildet. Diese sind jeweils zwischen zwei Durchtrittsfenstern 20 angeordnet (Fig. 4) und erstrecken sich in Umfangsrichtung über einen Winkelbereich, der demjenigen der Umfangserstreckung der Durchtrittsfenster 20 entspricht. Auf die Funktion dieser Aussparungen 19 wird im Nachstehenden noch näher eingegangen.

Aus der perspektivischen Ansicht von unten des Aufnahmeteils 10 ist ersichtlich, dass eine Innenwandung 23 der äusseren Schürze 14 mit axial verlaufenden Stegen 24 versehen ist, die gemäss dem dargestellten Ausführungsbeispiel gleichmässig über den gesamten Umfang der Innenwandung 23 verteilt sind. Die axialen Stege 24 dienen bei der Montage der Dosier- und Ausgiessvorrichtung 1 auf dem Hals eines Behälters als Drehsicherung. In der Nähe ihres freien Endes ist an der Innenwandung 23 der äusseren Schürze auch noch ein Mittel zur axialen Festlegung des Aufnahmeteils auf einem Behälterhals ausgebildet. Gemäss dem dargestellten Ausführungsbeispiel handelt es sich dabei um einen umlaufenden Wulst 25, der aus der Innenwandung 23 der äusseren Schürze 14 hervortritt.

In Fig. 7 bis 10 ist ein Dosiereinsatz 30 in unterschiedlichen Ansichten dargestellt. Der Dosiereinsatz 30 weist eine korrespondierend zum Aufnahmeteil 10 ausgebildete Form auf und besitzt einen mit einem Einsatzboden 32 verschlossenen Mantel 31. Der Mantel 31 umschliesst eine Überschusskammer 33, die sich von einem Mündungsrand 34 bis zu einer umlaufenden, geneigten Verbindungsfläche 35 erstreckt, und eine Dosierkammer 36, die sich von der Verbindungsfläche 35 axial bis zum Einsatzboden 32 erstreckt. Die Dosierkammer 36 weist einen kleineren Innendurchmesser auf als die Überschusskammer 33. In der geneigten Verbindungsfläche 35 sind gemäss dem dargestellten Ausführungsbeispiel drei Dosierfenster 40 angeordnet, die die sich in Umfangsrichtung beispielsweise über einen Winkel von 60° oder weniger erstrecken. An der Aussenseite des Mantels 31 kann jedes Dosierfenster 40 auch noch Abstreifer 41 aufweisen, die sich beispielsweise parallel zu den etwa radial verlaufenden Rändern der Dosierfenster 40 erstrecken.

Gemäss dem dargestellten Ausführungsbeispiels sind in der Verbindungsfläche 35 drei Dosierfenster 40 ausgebildet. Es versteht sich, dass die Anzahl der Dosierfenster auch kleiner sein kann. Beispielsweise kann auch nur ein Dosierfenster vorgesehen sein. Eine alternative Ausführungsvariante kann auch eine grössere Anzahl von Dosierfenstern aufweisen, die sich dann entsprechend über einen kleineren Winkelbereich der geneigten Verbindungsfläche erstrecken. Schliesslich können in der Verbindungsfläche nach Art eines groben Siebes sogar eine Vielzahl von kleineren Dosierfenstern bzw. Dosieröffnungen vorgesehen sein, deren Verteilung und Anordnung beispielswiese derjenigen in einem korrespondierend ausgebildeten Aufnahmeteil entspricht. Unterhalb des Mündungsrands 34 des Mantels 31 des Dosiereinsatzes 30 sind in einer Innenwandung 37 des Mantels 31 zweite Eingriffsmittel 38 in Form einer gleichmässigen Abfolge von axial verlaufenden Rippen und Nuten ausgebildet. Die zweiten Eingriffsmittel 38 sind entlang des gesamten Umfangs der Innenwandung 37 des Mantels 31 angeordnet. Die zweiten Eingriffsmittel 38 sind in der Nähe des Mündungsrands 34 jeweils mit einem erweiterten Einlaufbereich 39 ausgebildet.

Die perspektivische Ansicht von unten des Dosiereinsatzes 30 zeigt an einer Aussenfläche 42 des Einsatzbodens 32 ausgebildete radiale Leisten 43. Die Anzahl der radialen Leisten 43 entspricht bei dem dargestellten Ausführungsbeispiel derjenigen der Dosierfenster 40. Dabei sind die radialen Leisten 43 jeweils derart angeordnet, dass sie in einer axialen Projektion im Anschluss an einen radialen Randbereich eines Dosierfensters 40 gelegen sind. Die drei radialen Leisten 43 ragen bei einem im Aufnahmeteil 10 montierten Dosiereinsatz 30 jeweils in eine kreissegmentartige Aussparung 19 im Kammerboden 15 und dienen bei einer relativen Verdrehung des Dosiereinsatzes 30 gegenüber dem Aufnahmeteil 10 als eine Überdrehsicherung.

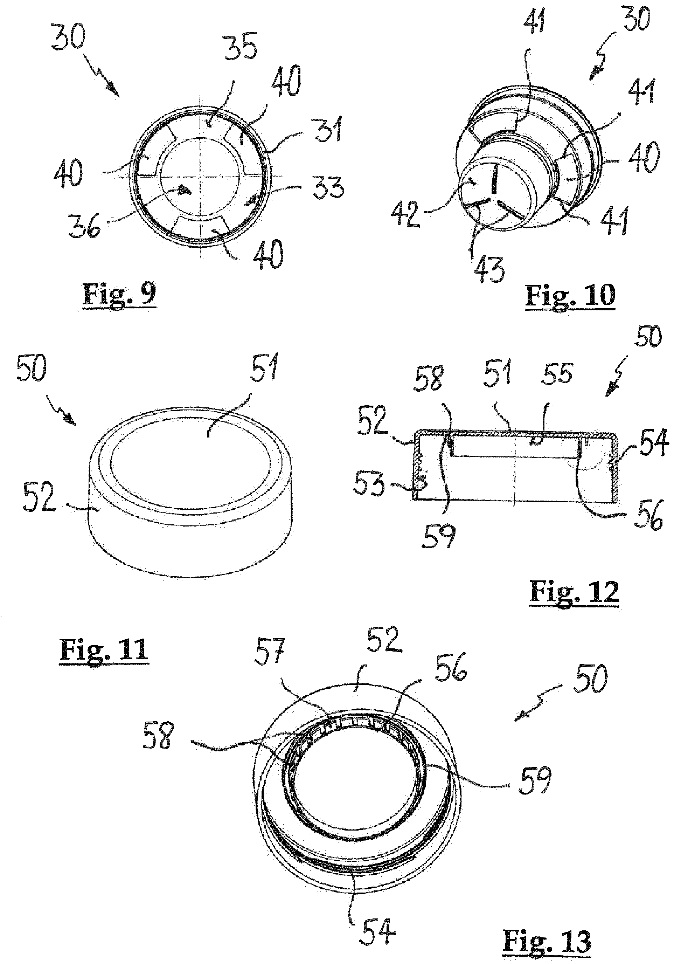

Fig. 11 bis 13 zeigen verschiedene Ansichten eines Verschlussteils 50. Das Verschlussteil 50 weist eine Deckplatte 51 auf, die von einem im wesentlichen zylindrischen Fortsatz 52 berandet wird. An einer Innenfläche 53 des zylindrischen Fortsatzes 52 sind formschlüssige Mittel, beispielsweise erste Gewindeabschnitte 54, ausgebildet, die zur drehenden formschlüssigen Fixierung des Verschlussteils 50 auf dem Aufnahmeteil 10 dienen. Dabei kommen die ersten Gewindeabschnitte 54 des Verschlussteils 50 in formschlüssigen Eingriff mit den korrespondierenden zweiten Gewindeabschnitten 22 an der Aussenfläche 21 der äusseren Schürze 14 des Aufnahmeteils 10.

Fig. 12 und 13 zeigen, dass von einer von einer inneren Deckfläche 55 der Deckplatte 51 des Verschlussteils 50 eine zylindrische Eingriffsschürze 56 abragt. An einer Umfangsfläche 57 der Eingriffsschürze 56 sind erste Eingriffsmittel 58 in Form von sich axial erstreckenden, vorzugsweise äquidistant angeordneten, Leisten ausgebildet, welche die Umfangsfläche 57 radial überragen. Weiters ist aus den Abbildungen ersichtlich, dass von der inneren Deckfläche 55 auch noch ein ringförmiger Dichtsteg 59 axial abragt, der die Eingriffsschürze 56 konzentrisch umgibt. Bei auf dem Aufnahmeteil 10 montiertem Verschlussteil 50 befindet sich der Dichtsteg 59 in radialer Anlage am flanschartigen Öffnungsrand 13 des Aufnahmeteils 10.

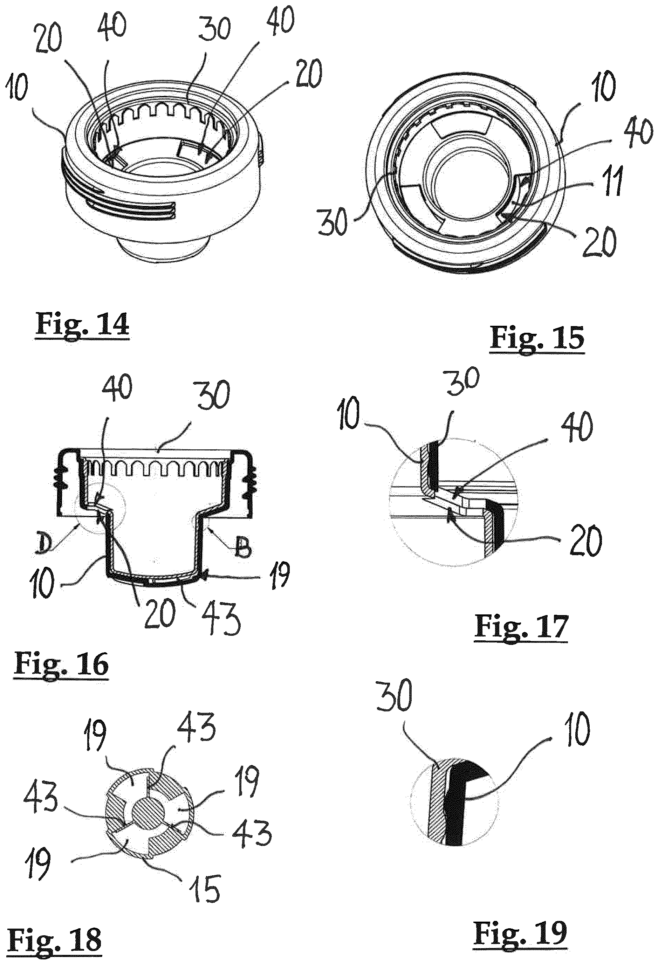

Fig. 14 bis 19 zeigen verschiedene Ansichten eines in einem Aufnahmeteil 10 montierten Dosiereinsatzes 30 in geöffnetem Zustand der Dosierfenster 40 und Durchtrittsfenster 20. Dabei befinden sich die Dosierfenster 40 und die Durchtrittsfenster 20 in Überdeckung. Dies ist insbesondere in Fig. 15 deutlich ersichtlich, bei der ein Teil des den durchmesserkleineren zweiten Kammerabschnitt umgebenden Innenmantels durch die überdeckenden Dosier- und Durchtrittsfenster 40, 20 sichtbar ist. Auch die Schnittdarstellung in Fig. 16 und die Detaildarstellung in Fig. 17 gemäss Buchstabe D in Fig. 16 zeigen, dass in geöffnetem Zustand die Dosierfenster 40 im Dosiereinsatz 30 und die Durchtrittsfenster 20 im Aufnahmeteil 10 sich in Überdeckung befinden. Wie aus der schematischen Darstellung in Fig. 18 ersichtlich ist, ragen die vom Einsatzboden abragenden radialen Leisten 43 am Dosiereinsatz in die kreissegmentartigen Aussparungen im Kammerboden 15 des Aufnahmeteils 19. Im geöffneten Zustand befinden sich die radialen Leisten 43 jeweils an einem Ende der zugehörigen Aussparung 19, in Anschlag zu den die kreissegmentartigen Aussparungen 19 trennenden Abschnitten des Kammerbodens 15.

Fig. 19 zeigt schliesslich noch ein in Fig. 16 mit B bezeichnetes Detail in vergrössertem Massstab. Daraus ist eine Ausführungsvariante einer formschlüssigen axialen Festlegung des Dosiereinsatzes 30 innerhalb des Aufnahmeteils 30 ersichtlich. Die Formschlüssige Verbindung ist dabei derart bemessen, dass eine gewollte Verdrehung des Dosiereinsatzes 30 relativ zum Aufnahmeteil bei Überwindung eines geringen Reibungswiderstands ermöglicht ist, jedoch ein ungewolltes Verdrehen der beiden Komponenten 10, 30 zueinander verhindert wird.

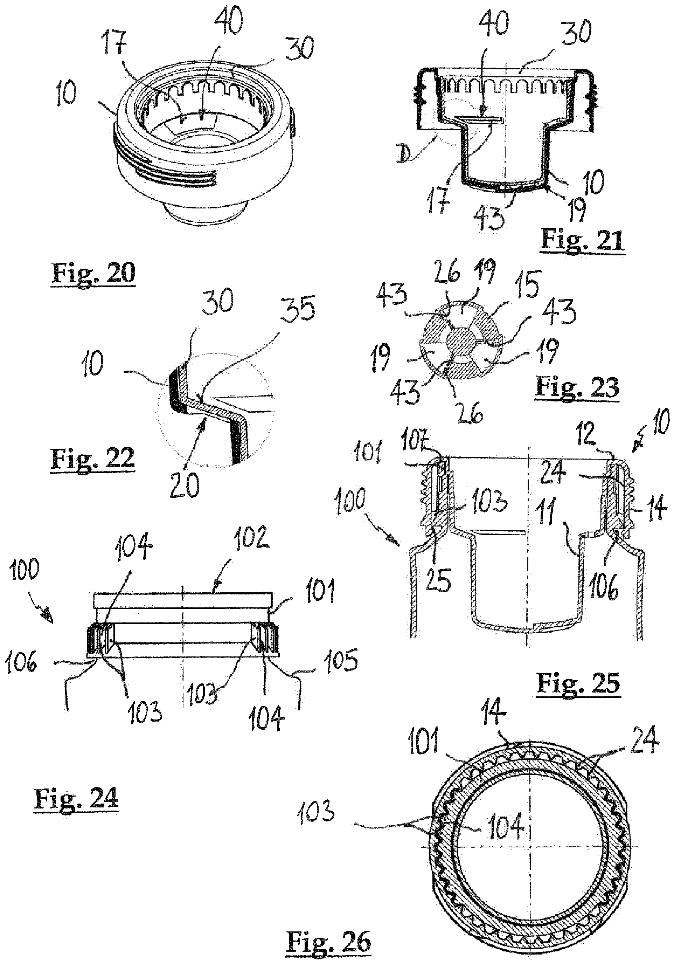

Fig. 20 bis 23 zeigen verschiedene Ansichten eines in einem Aufnahmeteil 10 montierten Dosiereinsatzes 30 in geschlossenem Zustand der Dosierfenster 40 und der Durchtrittsfenster. Dabei befinden sich die Dosierfenster 40 jeweils in Überdeckung mit einem Abschnitt der Abstützfläche 17 des Aufnahmeteils 10 zwischen den Durchtrittsfenstern 20 (Fig. 20) bzw. wird jedes Durchtrittsfenster 20 durch einen Abschnitt der Verbindungsfläche 35 des Dosiereinsatzes 30 zwischen den Dosierfenstern 40 verdeckt (Fig. 22).

Die zu Fig. 18 analoge schematische Darstellung in Fig. 23 zeigt, dass die vom Einsatzboden 32 abragenden radialen Leisten 43 wiederum in die kreissegmentartigen Aussparungen im Kammerboden 15 des Aufnahmeteils 19 ragen. Im geschlossenen Zustand der Durchtrittsfenster 20 und der Dosierfenster 40 befinden sich die radialen Leisten 43 wiederum jeweils an einem Ende der zugehörigen Aussparung 19, in Anschlag zu den die kreissegmentartigen Aussparungen 19 trennenden Abschnitten des Kammerbodens 15. Ein Vergleich mit Fig. 18 zeigt jedoch, dass die radialen Leisten 43 am gegenüberliegenden Ende der kreissegmentartigen Aussparungen 19 an die trennenden Abschnitte des Kammerbodens 15 angrenzen. In Fig. 23 sind strichliert radiale Verriegelungsrippen 26 angedeutet, die sich über den Boden jeder kreissegmentartigen Aussparung 19 erheben. Die Verriegelungsrippen 26 sorgen für eine Festlegung des Dosiereinsatzes 30 und des Aufnahmeteils 10 in ihren Endstellungen mit geschlossenen Durchtrittsfenstern 20 und Dosierfenstern 40 und verhindern ein unbeabsichtigtes Verdrehen relativ zueinander, beispielsweise durch Erschütterungen. Die Höhe der Verriegelungsvorsprünge 26 kann derart bemessen sein, dass beim relativen Verdrehen des Dosiereinsatzes 30 gegenüber dem Aufnahmeteil 10 ein spürbarer Widerstand überwunden werden muss. Andererseits sind die Verriegelungsvorsprünge 26 jedoch flach genug, damit es zu keinem Sperren der beiden relativ zueinander verdrehbaren Komponenten 10, 30 kommen kann.

Fig. 24 zeigt ein Ausführungsbeispiel eines Halses 101 eines Behälters 100 für die Montage einer erfindungsgemäss ausgebildeten Dosier- und Ausgiessvorrichtung 1 der vorstehend geschilderten Art. Insbesondere sind dazu in Nachbarschaft zur einer Halsmündung 102 etwa radial abragende Zähne 103 ausgebildet, die durch axial verlaufende Nuten 104 voneinander getrennt sind. Die Abfolge von Zähnen 103 und Nuten 104 muss sich nicht über den gesamten Umfang des Halses 101 erstrecken. Gemäss dem dargestellten Ausführungsbeispiel sind am Hals 101 des Behälters 100 zwei einander gegenüberliegende Segmente mit einer Abfolge von Zähnen 103 und Nuten 104 vorgesehen, die sich beispielsweise jeweils über einen Umfangsbereich von etwa 30° bis 60° erstrecken können. Die Abfolge von Zähnen 103 und Nuten 104 dient als Drehsicherung für das Aufnahmeteil der montierten Dosier- und Ausgiessvorrichtung. In Richtung einer Schulter 105 des Behälters 100 gesehen unterhalb der Abfolge von Zähnen 103 und Nuten 104 ist der Behälterhals mit einer umlaufenden Hinterschneidung 106 versehen. Die Hinterschneidung 106 dient zur axialen Festlegung des Aufnahmeteils der montierten Dosier- und Ausgiessvorrichtung.

Fig. 25 zeigt den Behälter 100 gemäss Fig. 24 mit montiertem Aufnahmeteil 10 einer Dosier- und Ausgiessvorrichtung. Aus Gründen der besseren Übersicht wurde auf die Darstellung der übrigen Komponenten (Dosiereinsatz und Deckelteil) der Dosier- und Ausgiessvorrichtung verzichtet. Aus Fig. 25 ist ersichtlich, dass die äussere Schürze 14 des Aufnahmeteils 10 den Hals 101 des Behälters 100 umschliesst. Der die Aufnahmekammer 12 umschliessende Innenmantel 11 des Aufnahmeteils ragt durch die Halsmündung 102 in das Innere des Behälters 100. Der Öffnungsrand 13 des Aufnahmeteils 10 kann auf einem die Halsmündung 102 berandenden Halsrand 107 aufliegen. Die von der Innenwandung 23 der äusseren Schürze 14 abragenden axialen Stege 24 greifen in die Nuten 104 zwischen den vom Hals 101 abragenden Zähnen 103 ein und bilden eine Drehsicherung für den Aufnahmeteil 10. Der im Bereich des freien Endes der äusseren Schürze 14 des Aufnahmeteils 10 von der Innenwandung 23 abragende umlaufende Wulst 25 hintergreift die Hinterschneidung 106 am Hals 101 des Behälters 100 und bildet eine axiale Sicherung für den montierten Aufnahmeteil 10.

Fig. 26 zeigt einen Querschnitt durch den Hals 101 des Behälters 100 und den darauf montierten Aufnahmeteil 10 im Bereich der vom Hals 101 abragenden Zähne 103. Rechts und links in der Darstellung greifen die axialen Stege 24 an der äusseren Schürze 14 in die Nuten 104 zwischen den radial vom Hals 101 des Behälters 100 abragenden Zähne 103 ein und verhindern ein Verdrehen des Aufnahmeteils 10.

Zur Erläuterung der Übertragung der Drehbewegung des Verschlussteils 50 auf den Dosiereinsatz 30, der gegenüber dem drehfest am Hals 101 des Behälters 100 montierten Aufnahmeteil 10 verdrehbar ist, kehren wir zu Fig. 1 und Fig. 2 zurück. Fig. 1 zeigt den Verschlussteil 50 in einer Position unmittelbar nachdem er aufgesetzt wurde und seine ersten Gewindeabschnitte 54 zu Beginn der drehenden Bewegung gerade in Eingriff mit den zweiten Gewindeabschnitten 22 an der Aussenfläche der äusseren Schürze des Aufnahmeteils 10 gelangt ist. Die von der Deckplatte des Verschlussteils 50 abragenden ersten Eingriffsmittel 58 befinden sich noch nicht in Eingriff mit den zweiten Eingriffsmitteln 38 unterhalb des Mündungsrands des Dosiereinsatzes 30. Die beiden zusammenwirkenden ersten und zweiten Gewindeabschnitte 54, 22 sind jeweils derart als ein Steilgewinde ausgebildet, dass es bei einer weiteren Drehbewegung des Verschlussteils 50 zu einer axialen Annäherung der ersten und zweiten Eingriffsmittel 58, 38 kommt, bis diese miteinander in Eingriff sind. Der erweiterte Einlaufbereich an den zweiten Eingriffsmitteln (Bezugszeichen 39 in Fig. 8) erleichtert dabei das Ineinandergreifen der ersten und zweiten Eingriffsmittel 58, 38. Durch weiteres Drehen des Verschlussteils 50 wird der Dosiereinsatz 30 gegenüber dem drehest am Hals 101 des Behälters 100 montierten Aufnahmeteil 10 verdreht und werden die Dosieröffnungen des Dosierteils 30 zur Überdeckung mit den Durchtrittsöffnungen am Aufnahmeteil 10 gebracht (Fig. 14 bis Fig. 17). Schliesslich befindet sich der festgedrehte Verschlussteil in der in Fig. 2 dargestellten Position. In dieser ersten Position, bei verschlossener Dosier- und Ausgiessvorrichtung 1, kann die Dosierkammer des Dosiereinsatzes 30 durch Schwenken des Behälters 100 um 180° und wieder zurückschwenken in seine Ausgangsstellung gefüllt werden.

Beim drehenden Lösen des Verschlussteils 50 vom Aufnahmeteil 10 durch Drehen in die Gegenrichtung wird zunächst die Drehbewegung des Verschlussteils 50 über die ersten Eingriffsmittel 58 auf die zweiten Eingriffsmittel 38 am Dosiereinsatz 30 übertragen, und werden die Dosieröffnungen 40 und die Durchtrittsöffnungen 20 in der zweiten Position verschlossen (Fig. 20 bis Fig. 22). Beim weiteren Drehen des Verschlussteils 50 gelangen die ersten und zweiten Eingriffsmittel 58, 38 wieder ausser Eingriff, wie dies in Fig. 1 dargestellt ist. Durch eine weitere kleine Drehbewegung kann der Verschlussteil 50 schliesslich abgenommen werden, und die in der Dosierkammer befindliche abgemessene Menge der fliessfähigen Substanz kann ausgegossen werden.

Die Erfindung ist im vorstehenden anhand einer Ausführungsvariante der Dosier- und Ausgiessvorrichtung erläutert worden, bei der das Aufnahmeteil, der Dosiereinsatz und das Verschlussteil zu einer baulichen Gesamtheit vormontierbar sind. Die Dosier- und Ausgiessvorrichtung ist dann als eine bauliche Gesamtheit auf den Hals eines Behälters montierbar. Eine alternative Ausführungsvariante der Erfindung kann jedoch auch vorsehen, dass nur das Aufnahmeteil und der Dosiereinsatz als bauliche Einheit vormontiert sind, und das Deckelteil erst zu einem späteren Zeitpunkt separat montiert wird. Bei dieser Ausführungsvariante der Erfindung kann das Aufnahmeteil beispielsweise ohne eine äussere Schürze mit zweiten Gewindeabschnitten zur drehenden formschlüssigen Festlegung des Verschlussteils ausgebildet sein. Statt dessen wird das Verschlussteil in gewohnter Weise über am Hals des Behälters ausgebildete Gewindeabschnitte auf den mit dem Aufnahmeteil und dem darin montierten Dosiereinsatz versehenen Hals des Behälters aufgeschraubt. Die Verdrehung des Dosiereinsatzes gegenüber dem Aufnahmeteil kann dabei in analoger Weise zu dem im vorstehenden Abschnitt beschriebenen Vorgang erfolgen. Der Behälter kann ein Behälter mit starren Wandungen sein, beispielsweise ein Glasbehälter, oder er kann ein Kunststoffbehälter aus beispielsweise in einem Blasverfahren verarbeitbaren Kunststoffen oder Kunststoffgemischen sein. Die vorstehende Beschreibung eines konkreten Ausführungsbeispiels dient somit nur zur Erläuterung der Erfindung und ist nicht als einschränkend zu betrachten. Vielmehr wird die Erfindung durch die Patentansprüche definiert.

## Patentansprüche

1. Dosier- und Ausgiessvorrichtung für fliessfähige Substanzen mit einem Aufnahmeteil (10), der eine Dosierkammer (36) umschliesst und wenigstens ein Durchtrittsfenster (20) aufweist, mit einem relativ zum Aufnahmeteil (10) verdrehbaren Dosiereinsatz (30), der innerhalb des Aufnahmeteils (10) angeordnet und wenigstens ein Dosierfenster (40) aufweist, und mit einem drehbaren Verschlussteil (50), das mit ersten Eingriffsmitteln (58) ausgestattet ist, welche sich im zusammengefügten Zustand der Komponenten (10, 30, 50) mit korrespondierenden zweiten Eingriffsmitteln (38) am Dosiereinsatz (30) derart in Eingriff befinden, dass ein Verdrehen des Verschlussteils (50) aus einer ersten Position in eine zweite Position und umgekehrt in einer Verdrehung des Dosiereinsatzes (30) relativ zum Aufnahmeteil (10) resultiert, wobei in der ersten Position das wenigstens eine Dosierfenster (40) des Dosiereinsatzes (30) und das wenigstens eine Durchtrittsfenster (20) des Aufnahmeteils (10) einander wenigstens teilweise überdecken so dass die Dosierkammer (36) des Dosiereinsatzes (30) bei verschlossener Dosier- und Ausgiessvorrichtung (1) durch Kopfüberschwenken eines Behälters, auf, den die Dosier- und Ausgiessvorrichtung (1) montiert ist, und wieder Zurückschwenken in die Ausgangsstellung gefüllt werden kann, und in der zweiten Position das Dosierfenster und (40) und das Durchtrittsfenster (20) voneinander getrennt sind, so dass der Verschlussteil (50) abgenommen werden und die in der Dosierkammer (36) befindliche abgemessene Menge der fliessfähigen Substanz ausgegossen werden kann, wobei die ersten Eingriffsmittel (58) und die zweiten Eingriffsmittel (38) bei einem Verdrehen des Verschlussteils (50) über die zweite Position hinaus ausser Eingriff sind.

2. Dosier- und Ausgiessvorrichtung gemäss Anspruch 1, **dadurch gekennzeichnet, dass** das Verschlussteil (50) derart ausgebildet ist, dass durch ein Verdrehen desselben eine Bewegung in axialer Richtung bewirkt ist.

3. Dosier- und Ausgiessvorrichtung gemäss Anspruch 1 oder 2, **dadurch gekennzeichnet, dass** das Aufnahmeteil (10) einen Innenmantel (11) aufweist, der eine rotationssymmetrische Aufnahmekammer (12) mit einem ersten Kammerabschnitt (16) umschliesst und an seinem einen axialen Ende einen radial abragenden flanschartigen Öffnungsrand (13) aufweist, wobei der erste Kammerabschnitt 16) sich vom flanschartigen Öffnungsrand (13) axial zu einer umlaufenden, vorzugsweise geneigten Abstützfläche (17), in der das wenigstens eine Durchtrittsfenster (20) ausgebildet ist, erstreckt, und dass der Dosiereinsatz (30) korrespondierend mit dem Aufnahmeteil (10) ausgebildet ist und einen mit einem Einsatzboden (32) verschlossenen Mantel (31) besitzt, der eine Überschusskammer (33) umschliesst, die sich von einem Mündungsrand (34) bis zu einer umlaufenden, vorzugsweise geneigten Verbindungsfläche (35) erstreckt, in der das wenigstens eine Dosierfenster (40) ausgebildet ist, und die Dosierkammer (36)sich von der Verbindungsfläche (35) axial bis zum Einsatzboden (32) erstreckt und einen kleineren Innendurchmesser aufweist als die Überschusskammer (33).

4. Dosier- und Ausgiessvorrichtung gemäss einem der vorangehenden Ansprüche, **dadurch gekennzeichnet, dass** die ersten Eingriffsmittel (58) am Verschlussteil (50) wenigstens eine sich axial erstreckende Leiste umfassen, die an einer Umfangsfläche (57) einer Eingriffsschürze (56), die sich axial von einer inneren Deckfläche (55) des Verschlussteils (50) erstreckt, angeordnet ist und diese radial überragt, und dass die zweiten Eingriffsmittel (38) eine dazu korrespondierende Abfolge von axialen Rippen und Nuten sind, die in Nachbarschaft zum Mündungsrand (34) an einer Wandung (37) der Überschusskammer (33) vorgesehen sind.

5. Dosier- und Ausgiessvorrichtung gemäss Anspruch 4, **dadurch gekennzeichnet, dass** jede von zwei aufeinanderfolgenden axialen Rippen begrenzte Nut an der Wandung (37) der Überschusskammer (33) einen in Richtung des Mündungsrands (34) erweitert ausgebildeten Einlaufbereich 39) für die wenigstens eine korrespondierende Leiste an der Eingriffsschürze (56) besitzt.

6. Dosier- und Ausgiessvorrichtung gemäss Anspruch 4 oder 5, **dadurch gekennzeichnet, dass** die wenigstens eine an der Umfangsfläche (57) der Eingriffsschürze (56) angeordnete axiale Leiste (58) einen sich in Richtung ihres freien Endes verjüngenden Teilbereich aufweist.

7. Dosier- und Ausgiessvorrichtung gemäss einem der Ansprüche 4 bis 6, **dadurch gekennzeichnet, dass** von der inneren Deckfläche (55) des Verschlussteils (50) ein ringförmiger Dichtsteg (59) in axialer Richtung abragt, der die Eingriffsschürze (56) konzentrisch umgibt und sich im zusammengefügten Zustand der Komponenten (10, 30, 50) in radialer Anlage am flanschartigen Öffnungsrand (13) befindet.

8. Dosier- und Ausgiessvorrichtung nach einem der vorangehenden Ansprüche, **dadurch gekennzeichnet, dass** der Dosiereinsatz (30) durch Formschluss axial unverlierbar im Aufnahmeteil (10) gehalten ist.

9. Dosier- und Ausgiessvorrichtung nach einem der Ansprüche 3 bis 8, **dadurch gekennzeichnet, dass** in der Abstützfläche (17) des Innenmantels (11) des Aufnahmeteils (10) drei Durchtrittsfenster (20) angeordnet sind, die jeweils den gleichen Winkelabstand voneinander aufweisen und die sich jeweils in Umfangsrichtung über einen Winkelbereich von weniger als 60° erstrecken, und dass in der Verbindungsfläche (35) des Mantels (31) des Dosiereinsatzes (30) drei Dosierfenster (40) angeordnet sind, die jeweils den gleichen Winkelabstand voneinander aufweisen und die sich jeweils in Umfangsrichtung über einen Winkelbereich von weniger als 60° erstrecken.

10. Dosier- und Ausgiessvorrichtung nach einem der Ansprüche 2 bis 7, **dadurch gekennzeichnet, dass** die rotationssymmetrische Aufnahmekammer (12) an ihrem vom flanschartigen Öffnungsrand (13) abgewandten axialen Ende mit einem Kammerboden (15) verschlossen ist, wobei an die Abstützfläche (17) ein zweiter Kammerabschnitt (18) anschliesst, der sich bis zum Kammerboden (15) erstreckt und einen kleineren Innendurchmesser aufweist als der erste Kammerabschnitt (16), und dass der Kammerboden (15) an seiner dem Kammerinneren zugewandten Seite eine Anzahl von kreissegmentartigen Aussparungen (19) aufweist, die der Anzahl von Durchtrittsfenstern (20) entspricht, wobei jede Aussparung (19) sich über einen Winkelbereich erstreckt, welcher der Umfangserstreckung eines Durchtrittsfensters (20) in der geneigten Abstützfläche (17) entspricht, und dass an einer dem Kammerboden (15) zugewandten Aussenfläche 42) des Einsatzbodens (32) des Dosiereinsatzes (30) eine Anzahl von sich radial erstreckenden Leisten (43) angeordnet ist, die der Anzahl von Dosierfenstern (40) in der Verbindungsfläche (35) entspricht, wobei im zusammengefügten Zustand der Komponenten jede Leiste (43) von einer Aussparung (19) im Kammerboden (15) aufgenommen ist.

11. Dosier- und Ausgiessvorrichtung nach Anspruch 10, **dadurch gekennzeichnet, dass** jede Aussparung (19) in einem Endbereich ihrer Umfangserstreckung einen Verriegelungsvorsprung (26), vorzugsweise eine radiale Verriegelungsrippe, aufweist, der vom Grund der Aussparung (19) abragt.

12. Dosier- und Ausgiessvorrichtung nach einem der Ansprüche 3 bis 11, **dadurch gekennzeichnet, dass** an der der Abstützfläche (17) des Aufnahmeteils (10) zugewandten Unterseite der Verbindungsfläche (35) des Dosiereinsatzes (30), im Bereich der Dosierfenster (40) Abstreifer (41) angeordnet sind.

13. Dosier- und Ausgiessvorrichtung nach einem der Ansprüche 3 bis 12, **dadurch gekennzeichnet, dass** der flanschartige Öffnungsrand (13) des Aufnahmeteils (10) mit einer zylindrischen äusseren Schürze (14) verbunden ist, die sich achsparallel und konzentrisch zum Innenmantel (11) erstreckt und an ihrer Aussenwandung (21) Mittel zur formschlüssigen Festlegung des mit korrespondierenden Eingriffsmitteln ausgestatteten Verschlussteils (50) aufweist.

14. Dosier- und Ausgiessvorrichtung nach Anspruch 13, **dadurch gekennzeichnet, dass** die Mittel zur formschlüssigen Festlegung des Verschlussteils (50) am Verschlussteil (50) angeordnete erste Gewindeabschnitte (54) und an der äusseren Schürze (14) angeordnete korrespondierenden zweite Gewindeabschnitte (22) sind.

15. Dosier- und Ausgiessvorrichtung nach Anspruch 14, **dadurch gekennzeichnet, dass** eine Steigung der ersten und zweiten Gewindeabschnitt (54, 22) derart ausgelegt ist, dass in der ersten Position die innere Deckfläche (55) des Verschlussteils (50) an dem flanschartigen Öffnungsrand (13) des Aufnahmeteils (10) anliegt.

16. Dosier- und Ausgiessvorrichtung nach Anspruch 13 bis 15, **dadurch gekennzeichnet, dass** zur radialen und axialen Festlegung des Aufnahmeteils (10) an einer dem Innenmantel (11) des Aufnahmeteils (10) zugewandten Innenwandung (23) der äusseren Schürze (14) Drehsicherungen (24) und wenigstens ein Mittel (25) zur axiale Sicherung für eine Montage der Dosier- und Ausgiessvorrichtung (1) auf einem mit korrespondierenden Eingriffsmitteln (103, 104, 106) ausgestatteten Behälterhals (101) vorgesehen sind.

17. Dosier- und Ausgiessvorrichtung nach einem der vorangehenden Ansprüche, **dadurch gekennzeichnet, dass** der Aufnahmeteil (10) und/oder der Dosiereinsatz (30) und/oder der Verschlussteil (50) in einem Kunststoffspritzverfahren hergestellt sind.

18. Behälter zur Aufnahme von fliessfähigen Substanzen mit einer Dosier- und Ausgiessvorrichtung (1) gemäss einem der vorangehenden Ansprüche, wobei der Aufnahmeteil (10) drehfest und axial unverlierbar auf einem Hals (101) des Behälters (100) montiert ist.

19. Behälter nach Anspruch 18, **dadurch gekennzeichnet, dass** die drehfeste und axial unverlierbare Fixierung des Aufnahmeteils (10) auf dem Behälterhals (101) ein Formschluss und/oder eine Verklebung und/oder ein Presssitz ist.

20. Behälter nach Anspruch 18 oder 19, **dadurch gekennzeichnet, dass** die Dosier- und Ausgiessvorrichtung (1) derart am Behälterhals (101) montiert ist, dass bei aufgesetztem Verschlussteil (50) das wenigstens eine Dosierfenster (40) sich wenigstens teilweise in Überdeckung mit dem Durchtrittsfenster (20) befindet, während das Dosierfenster (40) bei entferntem Verschlussteil (50) verschlossen ist.

21. Behälter nach einem der Ansprüche 18 bis 20, **dadurch gekennzeichnet, dass** er aus einem in einem Blasverfahren verarbeitbaren Kunststoff besteht.

22. Behälter nach einem der Ansprüche 18 bis 21, **dadurch gekennzeichnet, dass** er als ein Kopfstehbehälter ausgebildet ist, wobei eine Deckplatte (51) des Verschlussteils (50) eine Standfläche bildet.

## Claims

1. Dosing and pouring apparatus for flowable substances, having a receiving part (10) which surrounds a dosing chamber (36) and has at least one passage window (20), having a dosing insert (30) which is rotatable relative to the receiving part (10) and is arranged within the receiving part (10) and has at least one dosing window (40), and having a rotatable closure part (50) which is equipped with first engagement means (58) which, in the assembled state of the components (10, 30, 50), are in a state of engagement with corresponding second engagement means (38) on the dosing insert (30) such that rotation of the closure part (50) from a first position into a second position and vice versa results in rotation of the dosing insert (30) relative to the receiving part (10), wherein, in the first position, the at least one dosing window (40) of the dosing insert (30) and the at least one passage window (20) of the receiving part (10) at least partially overlap one another, with the result that, with the dosing and pouring apparatus (1) closed, the dosing chamber (36) of the dosing insert (30) can be filled by upending a container on which the dosing and pouring apparatus (1) is fitted and turning said container back into the initial position again, and in the second position, the dosing window (40) and the passage window (20) are separated from one another, with the result that the closure part (50) can be removed and the metered quantity of flowable substance situated in the dosing chamber (36) can be poured out, wherein the first engagement means (58) and the second engagement means (38) are out of engagement with rotation of the closure part (50) beyond the second position.

2. Dosing and pouring apparatus according to Claim 1, **characterized in that** the closure part (50) is formed such that rotation thereof gives rise to movement in an axial direction.

3. Dosing and pouring apparatus according to Claim 1 or 2, **characterized in that** the receiving part (10) has an inner shell (11) which surrounds a rotationally symmetrical receiving chamber (12) having a first chamber section (16) and which has at one of its axial ends a radially projecting flange-like opening boundary (13), wherein the first chamber section (16) extends from the flange-like opening boundary (13) axially to an encircling, preferably inclined, support surface (17) in which the at least one passage window (20) is formed, and **in that** the dosing insert (30) is formed in a manner corresponding to the receiving part (10) and has a shell (31) which is closed off by an insert base (32) and which surrounds a surplus chamber (33), extending from a mouth boundary (34) as far as an encircling, preferably inclined, connecting surface (35) in which the at least one dosing window (40) is formed, and the dosing chamber (36) extends from the connecting surface (35) axially as far as the insert base (32) and having a smaller inner diameter than the surplus chamber (33).

4. Dosing and pouring apparatus according to one of the preceding claims, **characterized in that** the first engagement means (58) on the closure part (50) comprise at least one axially extending strip, which is arranged on a circumferential surface (57) of an engagement skirt (56), extending axially from an inner cover surface (55) of the closure part (50), and projects radially beyond this, and **in that** the second engagement means (38) are a corresponding sequence of axial ribs and grooves, which are provided on a wall (37) of the surplus chamber (33) in the vicinity of the mouth boundary (34).

5. Dosing and pouring apparatus according to Claim 4, **characterized in that** each groove, delimited by two successive axial ribs, on the wall (37) of the surplus chamber (33) has an inlet region (39), formed to widen in the direction of the mouth boundary (34), for the at least one corresponding strip on the engagement skirt (56).

6. Dosing and pouring apparatus according to Claim 4 or 5, **characterized in that** the at least one axial strip (58) arranged on the circumferential surface (57) of the engagement skirt (56) has a sub-region which narrows in the direction of the free end of said at least one axial strip.

7. Dosing and pouring apparatus according to one of Claims 4 to 6, **characterized in that** an annular sealing web (59) projects in an axial direction from the inner cover surface (55) of the closure part (50) and concentrically surrounds the engagement skirt (56) and, in the assembled state of the components (10, 30, 50), is in a state in which it radially bears against the flange-like opening boundary (13).

8. Dosing and pouring apparatus according to one of the preceding claims, **characterized in that** the dosing insert (30) is retained in the receiving part (10) in an axially captive manner by way of form fitting.

9. Dosing and pouring apparatus according to one of Claims 3 to 8, **characterized in that** three passage windows (20) are arranged in the support surface (17) of the inner shell (11) of the receiving part (10) and each have equal angular spacings to one another and each extend in a circumferential direction over an angle range of less than 60°, and **in that** three dosing windows (40) are arranged in the connecting surface (35) of the shell (31) of the dosing insert (30) and each have equal angular spacings to one another and each extend in a circumferential direction over an angle range of less than 60°.

10. Dosing and pouring apparatus according to one of Claims 2 to 7, **characterized in that** the rotationally symmetrical receiving chamber (12), at its axial end facing away from the flange-like opening boundary (13), is closed off by a chamber base (15), wherein the support surface (17) is adjoined by a second chamber section (18), which extends as far as the chamber base (15) and has a smaller inner diameter than the first chamber section (16), and **in that** the chamber base (15) has on its side facing the chamber interior a number of circular segment-like cutouts (19), said number corresponding to the number of passage windows (20), wherein each cutout (19) extends over an angle range which corresponds to the circumferential extent of a passage window (20) in the inclined support surface (17), and **in that**, on an outer surface (42), facing the chamber base (15), of the insert base (32) of the dosing insert (30), there are arranged a number of radially extending strips (43), said number corresponding to the number of dosing windows (40) in the connecting surface (35), wherein, in the assembled state of the components, each strip (43) is received by a cutout (19) in the chamber base (15) .

11. Dosing and pouring apparatus according to Claim 10, **characterized in that** each cutout (19) has in an end region of its circumferential extent a locking projection (26), preferably a radial locking rib, which projects from the base of the cutout (19).

12. Dosing and pouring apparatus according to one of Claims 3 to 11, **characterized in that** scrapers (41) are arranged on the bottom side, facing the support surface (17) of the receiving part (10), of the connecting surface (35) of the dosing insert (30) in the region of the dosing windows (40) .

13. Dosing and pouring apparatus according to one of Claims 3 to 12, **characterized in that** the flange-like opening boundary (13) of the receiving part (10) is connected to a cylindrical outer skirt (14), which extends in an axially parallel and concentric manner with respect to the inner shell (11) and which has on its outer wall (21) means for the form-fitting fixing of the closure part (50), the latter being equipped with corresponding engagement means.

14. Dosing and pouring apparatus according to Claim 13, **characterized in that** the means for the form-fitting fixing of the closure part (50) are first thread sections (54) arranged on the closure part (50) and corresponding second thread sections (22) arranged on the outer skirt (14).

15. Dosing and pouring apparatus according to Claim 14, **characterized in that** a pitch of the first and second thread sections (54, 22) is formed such that, in the first position, the inner cover surface (55) of the closure part (50) bears against the flange-like opening boundary (13) of the receiving part (10).

16. Dosing and pouring apparatus according to Claims 13 to 15, **characterized in that**, for the radial and axial fixing of the receiving part (10), provision is made on an inner wall (23), facing the inner shell (11) of the receiving part (10), of the outer skirt (14) of rotation prevention means (24) and at least one means (25) for axial securing for fitting of the dosing and pouring apparatus (1) on a container neck (101) which is equipped with corresponding engagement means (103, 104, 106).

17. Dosing and pouring apparatus according to one of the preceding claims, **characterized in that** the receiving part (10) and/or the dosing insert (30) and/or the closure part (50) are produced in a plastic injection-moulding process.

18. Container for receiving flowable substances, having a dosing and pouring apparatus (1) according to one of the preceding claims, wherein the receiving part (10) is fitted in a rotationally conjoint and axially captive manner on a neck (101) of the container (100).

19. Container according to Claim 18, **characterized in that** the rotationally conjoint and axially captive fixing of the receiving part (10) on the container neck (101) is a form fit and/or an adhesive bond and/or a press fit.

20. Container according to Claim 18 or 19, **characterized in that** the dosing and pouring apparatus (1) is fitted on the container neck (101) such that, with the closure part (50) mounted, the at least one dosing window (40) is at least partially in a state in which it overlaps the passage window (20), while the dosing window (40), with the closure part (50) removed, is closed off.

21. Container according to one of Claims 18 to 20, **characterized in that** it consists of a plastic which is able to be processed in a blowing process.

22. Container according to one of Claims 18 to 21, **characterized in that** it is formed as an upending container, wherein a cover plate (51) of the closure part (50) forms a standing surface.

## Revendications

1. Dispositif de dosage et de versement pour des substances fluides, comprenant un élément de réception (10) qui entoure une chambre de dosage (36) et présente au moins une fenêtre de passage (20), comprenant un insert de dosage (30) qui est disposé à l'intérieur de l'élément de réception (10) et peut être tourné par rapport à l'élément de réception (10) et présente au moins une fenêtre de dosage (40), et comprenant un élément d'obturation (50) tournant qui est doté de premiers moyens d'engagement (58) qui, à l'état assemblé des composants (10, 30, 50), sont en prise avec des deuxièmes moyens d'engagement (38) correspondants de l'insert de dosage (30), de manière à ce qu'une rotation de l'élément d'obturation (50), d'une première position à une deuxième position et inversement, ait pour résultat une rotation de l'insert de dosage (30) par rapport à l'élément de réception (10), sachant que dans la première position, la fenêtre de dosage (40), au nombre d'au moins une, de l'insert de dosage (30) et la fenêtre de passage (20), au nombre d'au moins une, de l'élément de réception (10) se recouvrent au moins en partie, de sorte que lorsque le dispositif de dosage et de versement (1) est fermé, la chambre de dosage (36) de l'insert de dosage (30) peut être remplie en retournant tête en bas un récipient, sur lequel est monté le dispositif de dosage et de versement (1), et en redressant le récipient dans sa position initiale, et sachant que dans la deuxième position, la fenêtre de dosage (40) et la fenêtre de passage (20) sont séparées l'une de l'autre, de sorte que l'élément d'obturation (50) peut être retiré et la quantité mesurée de la substance fluide qui se trouve dans la chambre de dosage (36) peut être déversée, et sachant que les premiers moyens d'engagement (58) et les deuxièmes moyens d'engagement (38) sont hors de prise lors d'une rotation de l'élément d'obturation (50) au-delà de la deuxième position.

2. Dispositif de dosage et de versement selon la revendication 1, **caractérisé en ce que** l'élément d'obturation (50) est agencé de manière à ce qu'une rotation dudit élément provoque un mouvement dans la direction axiale.

3. Dispositif de dosage et de versement selon la revendication 1 ou 2, **caractérisé en ce que** l'élément de réception (10) présente une enveloppe intérieure (11) qui entoure une chambre de réception (12) symétrique de révolution, comprenant une première partie de chambre (16), et présente à l'une de ses extrémités axiales un bord d'ouverture (13) en forme de collet faisant saillie dans le sens radial, où la première partie de chambre (16), s'étend à partir du bord d'ouverture (13) en forme de collet, axialement en direction d'une surface d'appui (17) périphérique, de préférence inclinée, dans laquelle est réalisée la fenêtre de passage (20), au nombre d'au moins une, et **en ce que** l'insert de dosage (30) est réalisé en correspondance avec l'élément de réception (10) et possède une enveloppe (31) qui est fermée par un fond d'insert (32) et entoure une chambre d'excédent (33) qui s'étend depuis un bord d'embouchure (34) jusqu'à une surface de liaison (35) périphérique, de préférence inclinée, dans laquelle est réalisée la fenêtre de dosage (40), au nombre d'au moins une, et la chambre de dosage (36) s'étend à partir de la surface de liaison (35), axialement jusqu'au fond d'insert (32), et présente un diamètre intérieur qui est plus petit que celui de la chambre d'excédent (33).

4. Dispositif de dosage et de versement selon l'une des revendications précédentes, **caractérisé en ce que** les premiers moyens d'engagement (58) de l'élément d'obturation (50) comportent au moins une moulure qui s'étend dans le sens axial et est disposée sur une surface périphérique (57) d'une jupe d'engagement (56), s'étendant axialement à partir d'une surface de recouvrement intérieure (55) de l'élément d'obturation (50), et dépasse radialement par rapport à celle-ci, et **en ce que** les deuxièmes moyens d'engagement (38) sont constitués d'une succession correspondante de nervures et de rainures axiales qui sont prévues à proximité du bord d'embouchure (34), sur une paroi (37) de la chambre d'excédent (33).

5. Dispositif de dosage et de versement selon la revendication 4, **caractérisé en ce que** chaque rainure délimitée par deux nervures axiales successives, sur la paroi (37) de la chambre d'excédent (33), comporte une zone d'entrée (39), réalisée sous une forme élargie en direction du bord d'embouchure (34), pour la moulure correspondante, au nombre d'au moins une, prévue sur la jupe d'engagement (56).

6. Dispositif de dosage et de versement selon la revendication 4 ou 5, **caractérisé en ce que** la moulure axiale (58), au nombre d'au moins une, disposée sur la surface périphérique (57) de la jupe d'engagement, présente une portion qui se rétrécit en direction de son extrémité libre.

7. Dispositif de dosage et de versement selon l'une des revendications 4 à 6, **caractérisé en ce que**, partant de la surface de recouvrement intérieure (55) de l'élément d'obturation (50), une lèvre d'étanchéité (59) annulaire fait saillie dans la direction axiale et entoure de façon concentrique la jupe d'engagement (56) et, à l'état assemblé des composants (10, 30, 50), est en appui radial contre le bord d'ouverture (13) en forme de collet.

8. Dispositif de dosage et de versement selon l'une des revendications précédentes, **caractérisé en ce que** l'insert de dosage (30) est maintenu axialement de façon imperdable, par complémentarité de formes, dans l'élément de réception (10).

9. Dispositif de dosage et de versement selon l'une des revendications 3 à 8, **caractérisé en ce que** dans la surface d'appui (17) de l'enveloppe intérieure (11) de l'élément de réception (10), il est prévu trois fenêtres de passage (20) qui présentent respectivement le même écart angulaire entre elles et qui s'étendent chacune dans le sens périphérique, sur une plage angulaire inférieure à 60°, et **en ce que** dans la surface de liaison (35) de l'enveloppe (31) de l'insert de dosage (30), il est prévu trois fenêtres de dosage (40) qui présentent respectivement le même écart angulaire entre elles et qui s'étendent chacune dans le sens périphérique, sur une plage angulaire inférieure à 60°.

10. Dispositif de dosage et de versement selon l'une des revendications 2 à 7, **caractérisé en ce que** la chambre de réception (12) symétrique de révolution est fermée par un fond de chambre (15) à son extrémité axiale opposée au bord d'ouverture (13) en forme de collet, sachant que la surface d'appui (17) se raccorde à une deuxième partie de chambre (18) qui s'étend jusqu'au fond de chambre (15) et présente un diamètre intérieur qui est plus petit que celui de la première partie de chambre (16), et **en ce que** le fond de chambre (15) présente, sur sa face tournée vers l'intérieur de la chambre, un certain nombre d'évidements (19) en forme de segments de cercle qui correspond au nombre de fenêtres de passage (20), chaque évidement (19) s'étendant sur une plage angulaire qui correspond à la dimension circonférentielle d'une fenêtre de passage (20) dans la surface d'appui (17) inclinée, et **en ce qu'**il est prévu, sur une surface extérieure (42) du fond (43) de l'insert de dosage (30) qui est tournée vers le fond de chambre (15), un certain nombre de moulures (43) qui s'étendent dans le sens radial et dont le nombre correspond à celui des fenêtres de dosage (40) dans la surface de liaison (35), sachant qu'à l'état assemblé des composants, chaque moulure (43) est logée dans un évidement (19) dans le fond de chambre (15).

11. Dispositif de dosage et de versement selon la revendication 10, **caractérisé en ce que** dans une zone d'extrémité de sa dimension circonférentielle, chaque évidement (19) présente une saillie de verrouillage (26), de préférence une nervure de verrouillage radiale, qui s'étend à partir du fond de l'évidement (19).

12. Dispositif de dosage et de versement selon l'une des revendications 3 à 11, **caractérisé en ce que** sur la face inférieure de la surface de liaison (35) de l'insert de dosage (30) qui est tournée vers la surface d'appui (17) de l'élément de réception (10), des éléments racleurs (41) sont disposés dans la région des fenêtres de dosage (40).

13. Dispositif de dosage et de versement selon l'une des revendications 3 à 12, **caractérisé en ce que** le bord d'ouverture (13) en forme de collet de l'élément de réception (10) est relié à une jupe extérieure (14) cylindrique qui s'étend parallèlement à l'axe et de façon concentrique à l'enveloppe intérieure (11) et présente sur sa paroi externe (21) des moyens destinés à la fixation par complémentarité de formes de l'élément d'obturation (50) doté de moyens d'engagement correspondants.

14. Dispositif de dosage et de versement selon la revendication 13, **caractérisé en ce que** les moyens destinés à la fixation par complémentarité de formes de l'élément d'obturation (50) sont des premières parties filetées (54), disposées sur l'élément d'obturation (50), et des deuxièmes parties filetées (22) correspondantes, disposées sur la jupe extérieure (14).

15. Dispositif de dosage et de versement selon la revendication 14, **caractérisé en ce qu'**un pas des premières et deuxièmes parties filetées (54, 22) est prévu de telle manière que dans la première position, la surface de recouvrement (55) intérieure de l'élément d'obturation (50) soit appliquée contre le bord d'ouverture (13) en forme de collet de l'élément de réception (10).

16. Dispositif de dosage et de versement selon les revendications 13 à 15, **caractérisé en ce que** pour l'immobilisation radiale et axiale de l'élément de réception (10) sur une paroi interne (23) de la jupe extérieure (14) tournée vers l'enveloppe intérieure (11) de l'élément de réception (10), il est prévu des éléments de blocage en rotation (24) et au moins un moyen (25) de blocage axial en vue d'un montage du dispositif de dosage et de versement (1) sur un col de récipient (101) doté de moyens d'engagement (103, 104, 106) correspondants.

17. Dispositif de dosage et de versement selon l'une des revendications précédentes, **caractérisé en ce que** l'élément de réception (10) et/ou l'insert de dosage (30) et/ou l'élément d'obturation (50) sont fabriqués dans le cadre d'un procédé d'injection de matière plastique.

18. Récipient destiné à contenir des substances fluides, comprenant un dispositif de dosage et de versement (1) selon l'une des revendications précédentes, dans lequel l'élément de réception (10) est monté de manière fixe en rotation et imperdable dans le sens axial sur un col (101) du récipient (100).

19. Récipient selon la revendication 18, **caractérisé en ce que** la fixation bloquée en rotation et imperdable dans le sens axial de l'élément de réception (10) sur le col de récipient (101) se fait par complémentarité de formes et/ou par collage et/ou par ajustement serré.

20. Récipient selon la revendication 18 ou 19, **caractérisé en ce que** le dispositif de dosage et de versement (1) est monté sur le col de récipient (101) de manière telle que lorsque l'élément d'obturation (50) est mis en place, la fenêtre de dosage (40), au nombre d'au moins une, coïncide au moins en partie avec la fenêtre de passage (20), tandis que la fenêtre de dosage (40) est fermée lorsque l'élément d'obturation (50) est retiré.

21. Récipient selon l'une des revendications 18 à 20, **caractérisé en ce qu'**il est constitué d'une matière plastique pouvant être mise en œuvre dans le cadre d'un procédé de soufflage.

22. Récipient selon l'une des revendications 18 à 21, **caractérisé en ce qu'**il est réalisé sous forme de récipient tête en bas, dans lequel une plaque de recouvrement (51) de l'élément d'obturation (50) constitue une surface de pose.
